# EUROPÄISCHE PATENTSCHRIFT

(11) **EP 3 250 379 B1**
(45) Veröffentlichungstag und Bekanntmachung des Hinweises auf die Patenterteilung: **20.04.2022**
(21) Anmeldenummer: 15805432.0
(22) Anmeldetag: 02.12.2015
(51) Int. Cl.: B32B 17/10, H05B 3/84

(54) **BEHEIZBARE LAMINIERTE SEITENSCHEIBE**
HEATABLE LAMINATED SIDE WINDOW
VITRE LATÉRALE LAMINÉE POUVANT ÊTRE CHAUFFÉE

(30) Priorität: 26.01.2015 EP 15152463
(43) Veröffentlichungstag der Anmeldung: 06.12.2017
(73) Patentinhaber: SAINT-GOBAIN GLASS FRANCE, 92400 Courbevoie (FR)
(72) Erfinder: KLEIN, Marcel, 52499 Baesweiler (DE); KREBS, Benjamin, 44797 Bochum (DE)
(74) Vertreter: Gebauer, Dieter Edmund
(86) Internationale Anmeldenummer: PCT/EP2015/078303
(87) Internationale Veröffentlichungsnummer: WO 2016/119950

(56) Entgegenhaltungen:
- EP-A1- 1 404 153
- WO-A1-2006/010698
- DE-A1-102004 029 164
- DE-T2- 60 315 158

## Beschreibung

Die Erfindung betrifft eine beheizbare laminierte Seitenscheibe, ein Verfahren zu deren Herstellung und deren Verwendung.

Kraftfahrzeuge verfügen typischerweise über öffenbare Seitenfenster. Solche Seitenfenster sind mit einer Seitenscheibe versehen, welche sich durch im Wesentlichen vertikale Verschiebung bewegen lässt, wodurch das Seitenfenster geöffnet und geschlossen werden kann.

Seitenscheiben können als laminierte Verbundsicherheitsscheiben ausgestaltet sein, welche eine Außenscheibe und eine Innenscheibe umfassen, die über eine thermoplastische Zwischenschicht, typischerweise eine PVB-Folie, miteinander verbunden sind. Es sind auch beheizbare laminierte Seitenscheiben bekannt, welche mit Heizdrähten ausgestattet sind. Die Heizdrähte sind in die thermoplastische Zwischenschicht eingebettet. Zur elektrischen Kontaktierung der Heizdrähte sind typischerweise Stromsammelschienen (auch Sammelleiter oder Busbars genannt) vorgesehen. Geeignete Stromsammelschienen sind beispielsweise Streifen einer Kupferfolie, welche mit einer externen Spannungsquelle verbunden werden. Die Heizdrähte verlaufen zwischen den Stromsammelschienen, so dass ein Strom durch die Heizdrähte fließen kann, wodurch die Heizwirkung erreicht wird. Solche Seitenscheiben sind beispielsweise aus DE10126869A1 oder WO2005055667A2 bekannt.

Es sind auch Seitenscheiben bekannt, welche statt mittels eines Heizdrahts durch eine transparente Beschichtung beheizt werden. Die Beschichtungen umfassen dabei elektrisch leitfähige Schichten, insbesondere auf Silberbasis. Die Beschichtungen sind ebenfalls mit zwei Stromsammelschienen elektrisch kontaktiert, zwischen denen ein Strom durch die beheizbare Beschichtung fließt. Aufgrund der komplexen Form von Seitenscheiben ist es aber möglich, die Stromsammelschienen parallel zueinander so anzuordnen, dass sich ein homogenes Heizfeld im Durchsichtbereich der Scheibe ausbildet. Um die Strompfade zwischen den Stromsammelschienen trotzdem möglichst gleichmäßig über den Durchsichtbereich der Scheibe zu leiten, ist es üblich, die Beschichtung mittels linienförmiger, entschichteter Bereiche zu strukturieren. Solche Seitenscheiben sind beispielsweise aus DE102004029164A1, WO03/105533A1 und WO2006010698A1 bekannt.

Wie aus dem vorstehend genannten Stand der Technik ersichtlich ist, ist es bislang üblich, die Stromsammelschienen einer beheizbaren, laminierten Seitenscheibe entlang der Unterkante der Seitenscheibe anzuordnen, welche stets von der Fahrzeugkarosserie verdeckt ist. So bleibt die elektrische Kontaktierung der beheizbaren Scheibe stets verborgen. Offenbar herrscht die Auffassung vor, dass Stromsammelschienen entlang anderer Seitenkanten als der Unterkante, insbesondere entlang der Vorderkante, im geöffneten Zustand des Seitenfensters für den Betrachter sichtbar sind, was aus ästhetischen Gründen nicht akzeptabel ist.

Die herkömmlichen beheizbaren Seitenscheiben mit den Stromsammelschienen entlang der Unterkante weisen eine Reihe von Nachteilen auf. Die räumliche Nähe der beiden entgegengesetzt gepolten Stromsammelschienen setzt aufwendige Isolierungsmaßnahmen voraus, um Kurzschlüsse dauerhaft zu vermeiden. Außerdem müssen die Heizdrähte oder strukturierten Segmente der Beschichtung ausgehend von der Unterkante mäanderartig über die Scheibe zurück zur Unterkante geführt werden, um die Scheibe auf ihrer gesamten Fläche zu beheizen. Ein solcher mäanderartige Verlauf kann aus ästhetischen Gründen unerwünscht sein. Außerdem können sich bei starken lokalen Krümmungen des Strompfads Stellen mit lokaler Überhitzung ausbilden (sogenannte *hotspots).*

Der vorliegenden Erfindung liegt die Aufgabe zugrunde, eine verbesserte beheizbare, laminierte Seitenscheibe bereitzustellen.

Die Aufgabe der vorliegenden Erfindung wird erfindungsgemäß durch eine beheizbare laminierte Seitenscheibe gemäß Anspruch 1 gelöst. Bevorzugte Ausführungen gehen aus den Unteransprüchen hervor.

Die erfindungsgemäße beheizbare laminierte Seitenscheibe ist für ein öffenbares Seitenfenster eines Fahrzeugs vorgesehen. Darunter wird ein Seitenfenster verstanden, welches sich durch im Wesentlichen vertikale Verschiebung der Seitenscheibe in die Karosserietür hinein öffnen und wieder schließen lässt.

Die beheizbare laminierte Seitenscheibe weist eine Oberkante, eine Unterkante, eine Vorderkante und eine Hinterkante auf. Mit Oberkante wird die Seitenkante der Seitenscheibe bezeichnet, welche in Einbaulage nach oben weist. Mit Unterkante wird die Seitenkante bezeichnet, welche in Einbaulage nach unten zum Erdboden weist. Mit Vorderkante wird die Seitenkante bezeichnet, welche in Fahrtrichtung nach vorne gerichtet ist. Mit Hinterkante wird die Seitenkante bezeichnet, welche in Fahrtrichtung nach hinten gerichtet ist.

Die beheizbare laminierte Seitenscheibe umfasst mindestens eine Außenscheibe und eine Innenscheibe, welche über eine thermoplastische Zwischenschicht miteinander verbunden sind. Mit Innenscheibe wird dabei diejenige Scheibe bezeichnet, welche in Einbaulage dem Innenraum des Fahrzeugs zugewandt ist. Mit Außenscheibe wird diejenige Scheibe bezeichnet, welche in Einbaulage der äußeren Umgebung des Fahrzeugs zugewandt ist.

Zwischen der Außenscheibe und der Innenscheibe ist erfindungsgemäß eine transparente beheizbare Beschichtung angeordnet, welche mittels einer ersten Stromsammelschiene und einer zweiten Stromsammelschiene elektrisch kontaktiert ist. Die Stromsammelschienen sind dafür vorgesehen, mit einer externen Spannungsquelle verbunden zu werden, so dass im Betrieb ein Heizstrom zwischen den Sammelschienen durch die beheizbare Beschichtung fließt. Die Beschichtung fungiert so als Heizschicht und beheizt die Seitenscheibe infolge ihres elektrischen Widerstandes, beispielsweise um die Seitenscheibe zu enteisen oder von Feuchtigkeitsbeschlag zu befreien.

Die beheizbare Beschichtung weist zur Lenkung des Heizstroms zumindest eine entschichtete Isolierungslinie, in der Regel mehrere entschichtete Isolierungslinien auf. Unter einer Isolierungslinie ist im Sinne der Erfindung ein linienförmiger Bereich innerhalb der elektrisch leitfähigen Beschichtung zu verstehen, welcher nicht elektrisch leitfähig ist. Die Isolierungslinie erstreckt sich bevorzugt über die gesamte Dicke der elektrisch leitfähigen Beschichtung, zumindest aber über die gesamte Dicke der elektrisch leitfähigen Schicht(en) der Beschichtung. Die Isolierungslinie wird bevorzugt mittels eines Lasers in die elektrisch leitfähige Beschichtung eingebracht und durch laserinduzierte Degeneration innerhalb der elektrisch leitfähigen Beschichtung erzeugt. Eine solche laserinduzierte Degeneration ist beispielsweise die Abtragung der elektrisch leitfähigen Schicht oder eine chemische Veränderung der elektrisch leitfähigen Schicht. Durch die laserinduzierte Degeneration wird eine Unterbrechung der elektrischen Leitfähigkeit der Schicht erreicht. Die Isolierungslinie kann aber prinzipiell auch durch andere Verfahren ausgebildet werden, beispielsweise mechanische Abrasion.

Die Isolierungslinie oder die Isolierungslinien verlaufen zwischen den Stromsammelschienen. Damit ist gemeint, dass jede Isolierungslinie von der ersten Stromsammelschiene ohne Unterbrechung bis zur zweiten Stromsammelschiene verläuft. Die elektrische leitfähige Beschichtung ist durch die Isolierungslinien in verschiedene, voneinander getrennte Segmente unterteilt, die im Folgenden auch als Heizstreifen bezeichnet werden. Der Stromfluss zwischen den Stromsammelschienen findet nur innerhalb der jeweiligen Heizstreifen statt, während benachbarte Heizstreifen voneinander elektrisch isoliert sind und folglich kein Stromfluss zwischen benachbarten Heizstreifen stattfinden kann. Diese Heizstreifen ermöglichen es, den Pfad des Stromflusses zwischen der ersten Stromsammelschiene und der zweiten Stromsammelschiene gezielt zu formen, was aufgrund der komplexen Formen üblicher Seitenscheiben zur Gewährleistung einer homogenen Stromverteilung und damit Heizwirkung notwendig ist.

Erfindungsgemäß sind die erste Stromsammelschiene und die zweite Stromsammelschiene entlang der Vorderkante oder der Hinterkante der Seitenscheibe angeordnet. Eine Stromsammelschiene ist im Sinne der Erfindung dann entlang einer Seitenkante angeordnet, wenn sie einen geringen Abstand von der Seitenkante aufweist (der mittlere Abstand zur besagten Seitenkante ist geringer als zu allen anderen Seitenkanten) und ihre Erstreckungsrichtung im Wesentlichen der Richtung der Seitenkante folgt.

Der Erfindung liegt die überraschende Erkenntnis zugrunde, dass Stromsammelschienen auch entlang der Vorderkante und der Hinterkante einer Seitenscheibe angeordnet werden können, ohne im geöffneten Zustand der Scheibe für den Betrachter sichtbar zu sein. Solange der Abstand der Stromsammelschienen von der Kante nicht zu groß ist, werden die Stromsammelschienen vorteilhaft von Karosserieteilen der Fahrzeugtür sowie den üblicherweise bei Fahrzeugfenstern verwendeten Dichtlippen verdeckt. Die elektrische Kontaktierung ist somit in keinem Zustand der Scheibe sichtbar, wodurch die Seitenscheibe den ästhetischen Ansprüchen an Fahrzeugscheiben genügt.

In einer vorteilhaften Ausgestaltung verlaufen sämtliche Isolierungslinien zwischen der Stromsammelschiene entlang der Vorderkante und der Stromsammelschiene entlang der Hinterkante. Es existieren keine Isolierungslinien, die beispielsweise von einer Stromsammelschiene entlang der Vorder- oder Hinterkante zur Unterkante der Scheibe verlaufen, entlang der beispielsweise eine Verlängerung einer Stromsammelschiene angeordnet ist. Durch den konsequenten Verlauf sämtlicher Isolierungslinien zwischen Vorder- und Hinterkante wird eine besonders vorteilhafte Verteilung der Heizwirkung erreicht.

In einer vorteilhaften Ausgestaltung beträgt der maximale Abstand der Stromsammelschienen von derjenigen Seitenkante, entlang derer sie angeordnet sind, kleiner 3 cm, bevorzugt kleiner 2,5 cm, besonders bevorzugt kleiner 2 cm. Der maximale Abstand im Sinne der Erfindung wird zwischen der Seitenkante der Seitenscheibe und der von ihr abgewandten Kante der Stromsammelschiene gemessen. Dieser Abstand ist ausreichend gering, so dass die Stromsammelschienen mit der elektrischen Kontaktierung in einem Bereich angeordnet sind, der durch Karosserieteile und Dichtlippen typischer Kraftfahrzeug-Seitenfenster abgedeckt ist. Es hat sich überraschend gezeigt, dass bei diesen Abständen die Stromsammelschienen vorteilhaft hinter Karosserieteilen typischer Fahrzeuge verborgen bleiben. Daher können die angegebenen Abstände gleichsam als allgemeine Konstruktionslehre unabhängig vom konkreten Fahrzeugtyp verstanden werden.

Die Stromsammelschienen dürfen aber auch nicht zu dicht an der Seitenkante positioniert sein, weil sonst die Verbindung der Scheiben gestört wird und Luft über die Seitenkante in den Verbund eindringen kann. In einer vorteilhaften Ausgestaltung beträgt der minimale Abstand der Stromsammelschienen von derjenigen Seitenkante, entlang derer sie angeordnet sind, größer 3 mm, bevorzugt größer 5 mm. Damit werden gute Ergebnisse erzielt. Der minimale Abstand im Sinne der Erfindung wird zwischen der Seitenkante der Seitenscheibe und der ihr zugewandten Kante der Stromsammelschiene gemessen.

In einer bevorzugten Ausgestaltung ist eine Stromsammelschiene entlang der Vorderkante und die andere Stromsammelschiene entlang der Hinterkante der Seitenscheibe angeordnet. So werden die zur Verfügung stehenden, nicht sichtbaren Bereiche der Seitenscheibe optimal genutzt. Zudem können die Isolierungslinien ohne starke Krümmungen und Schleifen von der Vorderkante zur Hinterkante geführt werden, was ästhetisch ansprechend ist, eine homogene Verteilung der Heizleistung erleichtert und die Gefahr von lokaler Überhitzung verringert.

Die Isolierungslinien können in diesem Fall in einer bevorzugten Ausführung ohne starke Krümmungen von der ersten Stromsammelschiene zur zweiten Stromsammelschiene verlaufen. Aufgrund der komplexen Form von Seitenscheiben wird typischerweise zumindest ein Teil der Isolierungslinien nicht vollkommen geradlinig zwischen den Stromsammelschienen verlaufen, um die Heizwirkung möglichst über die gesamte Scheibe zu verteilen. So werden beispielsweise die Isolierungslinien nahe der typischerweise gekrümmten Oberkante eine leichte, an die Oberkante angepasste Krümmung aufweisen. Alternativ können die Isolierungslinien aber auch einen mäanderförmigen Verlauf zwischen den Stromsammelschienen aufweisen und ihre Richtung mehrfach in der Art einer Kehrschleife ("U-Turn") ändern.

In einer alternativen bevorzugten Ausgestaltung sind beide Stromsammelschienen entlang derselben Seitenkante der Seitenscheibe angeordnet, also entweder entlang der Vorderkante oder entlang der Hinterkante. Die Heizstreifen verlaufen dann schleifenartig ausgehend von der ersten Stromsammelschiene über die Scheibe zur zweiten Stromsammelschiene. Die beiden Stromsammelschienen sind auf der beheizbaren Beschichtung angeordnet. Um sich nicht gegenseitig zu berühren, können die Stromsammelschienen einen unterschiedlichen Abstand zur Seitenkante, entlang derer sie sich erstrecken, aufweisen, also nebeneinander angeordnet sein. Ein unerwünschter Kontakt einer Stromsammelschiene zu einem Bereich der heizbaren Beschichtung, der der anderen Stromsammelschiene zugeordnet ist, kann durch geeignete Isolierungsmaßnahmen verhindert werden. Eine solche Isolierungsmaßnahme ist beispielsweise das Anbringen einer elektrisch isolierenden Folie, die bevorzugt Polyimid (PI) und/oder Polyisobutylen (PIB) enthält und eine Dicke von 10 µm bis 200 µm aufweist. Alternativ können die Stromsammelschienen bei geeigneter Führung der Heizpfade den gleichen Abstand zur Seitenkante aufweisen, sich aber entlang unterschiedlicher Bereiche der Seitenkante erstrecken. So können beispielsweise die Isolierungslinien so gestaltet sein, dass jeder Heizpfad im oberen Bereich, beispielsweise in der oberen Hälfte der Seitenkante beginnt und im unteren Bereich, beispielsweise der unteren Hälfte der Seitenkante endet, so dass die erste Stromsammelschiene nur entlang dieses oberen Bereichs der Seitenkante und die zweite Stromsammelschiene nur entlang des unteren Bereichs der Seitenkante angeordnet sein muss. Die Heizstreifen sind dann nach Art sich umschließender Schleifen angeordnet. Alternativ ist es auch möglich, die Heizstreifen so auszubilden, dass sie von der Vorderkante zur Hinterkante verlaufen, und jeweils zwei Heizstreifen durch Verbindungselemente (beispielsweise metallische Folien) seriell miteinander zu verbinden, so dass der Strompfad im ersten Heizstreifen von einer Kante zur anderen läuft und im zweiten Heizstreifen wieder zurück zur ersten Kante. Auch so kann die Beschichtung entlang einer einzigen Kante elektrisch kontaktiert werden.

Die beheizbare Beschichtung kann auf einer Oberfläche der Innenscheibe oder der Außenscheibe aufgebracht sein. Die Beschichtung ist vorteilhafterweise auf einer der Zwischenschicht zugewandten Oberfläche der Außenscheibe oder der Innenscheibe aufgebracht, weil sie dort vor Korrosion und sonstiger Beschädigung geschützt ist. Alternativ kann die beheizbare Beschichtung auf einer polymeren Trägerfolie innerhalb der Zwischenschicht angeordnet sein. Die Trägerfolie enthält bevorzugt zumindest Polyethylenterephthalat (PET), Polyethylen (PE) oder Gemische oder Copolymere oder Derivate davon. Das ist besonders vorteilhaft für die Handhabung, die Stabilität und die optischen Eigenschaften der Trägerfolie. Die Trägerfolie weist bevorzugt eine Dicke von 5 µm bis 500 µm besonders bevorzugt von 10 µm bis 200 µm und ganz besonders bevorzugt von 12 µm bis 75 µm auf. Trägerschichten mit diesen Dicken lassen sich vorteilhaft in Form von flexiblen und gleichzeitig stabilen Folien bereitstellen, die sich gut handhaben lassen.

Die beheizbare Beschichtung ist erfindungsgemäß transparent. Unter einer transparenten Beschichtung wird im Sinne der Erfindung eine Beschichtung verstanden, die im sichtbaren Spektralbereich eine Transmission von mindestens 50% aufweist, bevorzugt mindestens 70%.

Ein rahmenartiger Randbereich der Scheibe ist bevorzugt nicht mit der beheizbaren Beschichtung versehen. Dieser Randbereich wird häufig auch als Randentschichtung (im Falle einer auf eine Scheibe aufgebrachten Beschichtung) oder Rückschnitt (im Falle einer Beschichtung auf einer Trägerfolie) bezeichnet. Dadurch wird sichergestellt, dass die beheizbare Beschichtung keinen Kontakt zur umgebenden Atmosphäre hat, wodurch Korrosion verhindert wird - die Beschichtung ist gleichsam in der Zwischenschicht eingekapselt. Die Breite des beschichtungsfreien Randbereichs beträgt typischerweise von 0,5 mm bis 20 mm, insbesondere von 1 mm bis 10 mm. Die Scheibe kann auch weitere unbeschichtete Bereiche enthalten, beispielsweise Datentransmissionsfenster oder Kommunikationsfenster.

Die elektrisch leitfähige Beschichtung weist zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Dadurch wird guter Kompromiss zwischen Transparenz und elektrischer Leitfähigkeit der Schicht erreicht. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid.

In einer besonders bevorzugten Ausgestaltung weist die elektrisch leitfähige Beschichtung mindestens eine elektrisch leitfähige Schicht auf, welche Silber enthält, bevorzugt mindestens 99% Silber. Die Schichtdicke der elektrisch leitfähigen Schicht beträgt bevorzugt von 5 nm bis 50 nm, besonders bevorzugt von 10 nm bis 30 nm. Die Beschichtung weist bevorzugt zwei oder drei dieser leitfähigen Schichten auf, welche durch zumindest eine dielektrische Schicht voneinander getrennt sind. Solche Beschichtungen sind besonders vorteilhaft im Hinblick zum einen auf die Transparenz der Scheibe und zum anderen auf ihre Leitfähigkeit.

Die Breite der Isolierungslinien beträgt bevorzugt kleiner oder gleich 500 µm besonders bevorzugt von 10 µm bis 250 µm ganz besonders bevorzugt von 20 µm bis 150 µm. Isolierungslinien mit dieser Breite können leicht erzeugt werden, insbesondere durch Laserbearbeitung, gewährleisten die elektrische Isolierung benachbarter Heizstreifen und sind zudem optisch unauffällig.

Die beheizbare Beschichtung weist typischerweise eine Mehrzahl von Isolierungslinien auf, also mindestens zwei Isolierungslinien. Die genaue Anzahl und der Abstand der Isolierungslinien hängt im Einzelfall von der genauen Form der Scheibe ab und kann vom Fachmann durch Vorüberlegungen und Simulationen bestimmt werden. Der Abstand benachbarter Isolierungslinien beträgt bevorzugt von 1 cm bis 10 cm, bevorzugt von 2 cm bis 6 cm. Auch dies ist vorteilhaft im Hinblick auf die optische Unauffälligkeit der Isolierungslinien. Zudem wird durch Heizstreifen dieser Breite eine effektive Heizleistung gewährleistet. Die vorstehend genannten Werte sind insbesondere für Seitenscheiben von Personenkraftwagen geeignet. Für größere Seitenscheiben, beispielsweise von Lastkraftwagen, können aber auch deutlich größere Abstände gewählt werden, beispielsweise von 5 cm bis 30 cm. Die Anzahl der Isolierungslinien beträgt typischerweise von 2 bis 10, insbesondere von 3 bis 7. In einer Ausgestaltung der Erfindung weisen alle Heizstreifen die gleiche Breite auf. Die Isolierungslinien sind dann vorteilhaft gleichmäßig und unauffällig über die Scheibe verteilt.

Bei der Erfindung nimmt die Heizleistung (Flächenleistungsdichte *P_{S}*) von der Hinterkante zur Vorderkante zumindest abschnittsweise zu. Dies wird insbesondere dadurch erreicht, dass der Abstand benachbarter Isolierungslinien im Verlauf von der Hinterkante zur Vorderkante zumindest abschnittsweise abnimmt, die Breite der Heizstreifen also abnimmt. Dadurch verteilt sich der Heizstrom im vorderen Bereich der Scheibe auf eine geringere Heizstreifenbreite als im hinteren Bereich, wodurch die Heizleistung erhöht wird. Eine höhere Heizleistung im vorderen Scheibenbereich kann insbesondere für vordere Seitenscheiben gewünscht sein. Der vordere Scheibenbereich kann so schneller von Eis oder Feuchtigkeit befreit werden, wodurch die Sicht auf die Seitenspiegel schneller freigegeben wird. Hierbei beträgt die maximale Breite von sich verschmälernden Heizstreifen von 55 mm bis 110 mm (bevorzugt von 60 mm bis 100 mm), die minimale Breite von 10 mm bis 55 mm (bevorzugt von 10 mm bis 50 mm). Mit diesen Werten wird ein guter Kompromiss erreicht zwischen einer schnellen Enteisung im vorderen Bereich, um die Sicht auf die Seitenspiegel zügig freizugeben, und der Enteisung der gesamten Scheibe, die im Sinne der Verkehrssicherheit ebenfalls wichtig ist.

In einer vorteilhaften Ausgestaltung der Erfindung beträgt die mittlere Heizleistung (Flächenleistungsdichte *P_{S}*) der Scheibe mindestens 250 W/m², bevorzugt mindestens 300 W/m², besonders bevorzugt mindestens 350 W/m². Damit wird eine vorteilhafte Heizwirkung erzielt.

In einer vorteilhaften Ausgestaltung sind die Stromsammelschienen als Streifen einer elektrisch leitfähigen Folie ausgebildet. Die leitfähige Folie enthält bevorzugt Aluminium, Kupfer, verzinntes Kupfer, Gold, Silber, Zink, Wolfram und/oder Zinn oder Legierungen davon, besonders bevorzugt Kupfer. Die Dicke der elektrisch leitfähigen Folie beträgt bevorzugt von 10 µm bis 500 µm, besonders bevorzugt von 30 µm bis 200 µm, beispielsweise 50 µm oder 100 µm. Stromsammelschienen aus elektrisch leitfähigen Folien mit diesen Dicken sind technisch einfach zu realisieren und weisen eine vorteilhafte Stromtragfähigkeit auf. Die elektrisch leitfähige Folie kann direkt, über eine Lotmasse oder einen elektrisch leitfähigen Kleber mit der heizbaren Beschichtung elektrisch leitend verbunden sein. Stromsammelschienen aus Streifen einer leitfähigen Folie eigenen sich insbesondere dann, wenn die elektrisch leitfähige Beschichtung auf einer Trägerfolie in der Zwischenschicht angeordnet ist, können aber auch bei Beschichtungen auf einer Scheibenoberfläche verwendet werden. Zur Verbesserung der leitenden Verbindung kann zwischen leitfähiger Beschichtung und Stromsammelschiene beispielsweise eine silberhaltige Paste angeordnet werden.

In einer alternativen vorteilhaften Ausgestaltung sind die Stromsammelschienen als aufgedruckte und eingebrannte leitfähige Struktur ausgebildet. Die aufgedruckten Stromsammelschienen enthalten zumindest ein Metall, bevorzugt Silber. Die elektrische Leitfähigkeit wird bevorzugt über Metallpartikel, enthalten im Sammelleiter, besonders bevorzugt über Silberpartikel, realisiert. Die Metallpartikel können sich in einer organischen und/oder anorganischen Matrix wie Pasten oder Tinten befinden, bevorzugt als gebrannte Siebdruckpaste mit Glasfritten. Die Schichtdicke der aufgedruckten Stromsammelschienen beträgt bevorzugt von 5 µm bis 40 µm, besonders bevorzugt von 8 µm bis 20 µm und ganz besonders bevorzugt von 10 µm bis 15 µm. Aufgedruckte Stromsammelschienen mit diesen Dicken sind technisch einfach zu realisieren und weisen eine vorteilhafte Stromtragfähigkeit auf. Aufgedruckte Stromsammelschienen eigenen sich insbesondere dann, wenn die elektrisch leitfähige Beschichtung auf einer Oberfläche der Außenscheibe oder der Innenscheibe aufgebracht ist.

Die Länge der Stromsammelschienen hängt von der Gestaltung der Seitenscheibe ab, insbesondere von der Länge der Kante, entlang derer die Stromsammelschiene angeordnet ist, und kann vom Fachmann im Einzelfall geeignet gewählt werden. Unter der Länge der typischerweise streifenartigen Stromsammelschienen wird ihre längere Dimension verstanden, entlang derer sie üblicherweise mit den verschiedenen Heizstreifen kontaktiert sind.

Die Heizleistung lässt sich bei gegebener angelegter Spannung U (in der Regel durch den Fahrzeughersteller vorgegeben) und Schichtwiderstand R_{S} und Länge der Stromsammelschienen durch die Breite der Stromsammelschienen beeinflussen. Üblicherweise werden in einem Bereich für die Breite der Stromsammelschienen von 1 mm bis 20 mm, bevorzugt von 2 mm bis 10 mm gute Ergebnisse erzielt.

In einer bevorzugten Ausgestaltung der Erfindung erfolgt der Anschluss der Verbindungskabel zur externen Spannungsversorgung im Bereich der Unterkante. Dadurch können die Verbindungskabel in der Fahrzeugkarosserie verborgen werden. Die Seitenscheibe weist dazu bevorzugt zumindest eine Zuleitung auf, welche mit einer Stromsammelschiene elektrisch kontaktiert ist und ausgehend von den Stromsammelschienen zur Unterkante verläuft. Bevorzugt ist jede Stromsammelschiene mit solch einer Zuleitung versehen. Die Zuleitungen können beispielsweise in Form einer geraden Strecke zur Unterkante verlaufen, um dort (beispielsweise im Bereich der Projektion der Stromsammelschiene auf die Unterkante) kontaktiert zu werden. Die Zuleitungen können bereits innerhalb des Laminats, also vor Erreichen der Unterkante enden und mit einem Flachleiter kontaktiert sein. Alternativ können sich die Zuleitungen über die Unterkante hinaus erstrecken zur Kontaktierung mit den externen Verbindungskabeln außerhalb des Laminats.

Die den Stromsammelschienen entgegengesetzten Enden der Zuleitungen weisen in einer bevorzugten Ausgestaltung einen Abstand voneinander von kleiner oder gleich 30 mm, besonders bevorzugt kleiner oder gleich 20 mm, ganz besonders bevorzugt kleiner oder gleich 12 mm auf. Die Zuleitungen können dazu, wenn die Stromsammelschienen an verschiedenen Kanten der Seitenscheibe angeordnet sind, einen Abschnitt aufweisen, der entlang der Unterkante angeordnet ist. So können die Anschlussstellen der externen Verbindungskabel für beide Stromsammelschienen in räumliche Nähe zueinander geführt werden, was für den elektrischen Anschluss vorteilhaft sein kann.

Die Zuleitung kann, wie auf die Stromsammelschienen, bevorzugt als Streifen einer elektrisch leitfähigen Folie oder als eingebrannte Druckpaste ausgebildet sein. In einer Ausgestaltung sind die Stromsammelschienen und die Zuleitungen durch das gleiche Material ausgebildet, was die Herstellung der Scheibe vereinfacht und optimal für den Übergang der Elektrizität zwischen Stromsammelschiene und Zuleitung ist (aufgrund des gleichen elektrischen Widerstands). Es ist jedoch auch möglich, durch Siebdruck ausgebildete Stromsammelschienen mit leitfähigen Folien als Verbindungselemente zu kontaktieren.

Der Schichtwiderstand der elektrisch leitfähigen Beschichtung beträgt bevorzugt von 0,3 Ohm/Quadrat bis 7 Ohm/Quadrat. Damit werden bei üblicherweise im Fahrzeugbereich verwendeten Spannungen vorteilhafte Heizleistungen erreicht, wobei geringe Schichtwiderstände bei gleicher angelegter Spannung zu höheren Heizleistungen führen.

Die Außenscheibe und/oder die Innenscheibe enthält bevorzugt Glas, insbesondere Kalk-Natron-Glas, oder Kunststoffe, vorzugsweise starre Kunststoffe, insbesondere Polycarbonat, oder Polymethylmethacrylat.

Die Dicke der Scheiben kann breit variieren und so den Erfordernissen im Einzelfall angepasst werden. Vorzugsweise betragen die Dicken der Außenscheibe und der Innenscheibe von 0,5 mm bis 10 mm und bevorzugt von 1 mm bis 5 mm, ganz besonders bevorzugt von 1,4 mm bis 3 mm.

Die Außenscheibe, die Innenscheibe oder die Zwischenschicht können klar und farblos, aber auch getönt, getrübt oder gefärbt sein. Die Außenscheibe und die Innenscheibe können aus nicht vorgespanntem, teilvorgespanntem oder vorgespanntem Glas bestehen.

Die Zwischenschicht wird durch mindestens eine thermoplastische Verbindungsfolie gebildet. Die thermoplastische Verbindungsfolie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Verbindungsfolie beträgt bevorzugt von 0,2 mm bis 2 mm, besonders bevorzugt von 0,3 mm bis 1 mm, beispielsweise 0,38 mm oder 0,76 mm.

Ist die beheizbare Beschichtung auf einer Trägerfolie angeordnet, so ist diese Trägerfolie bevorzugt zwischen zwei thermoplastischen Verbindungsfolien angeordnet. Die Zwischenschicht umfasst dann zumindest zwei thermoplastische Verbindungsfolien und eine dazwischen angeordnete Trägerfolie mit elektrisch beheizbarer Beschichtung.

Typische heizbare Beschichtungen weisen auch Infrarot(IR)-reflektierende Eigenschaften auf. Durch die erfindungsgemäße Beschichtung wird daher nicht nur die Heizfunktion, sondern gleichzeitig auch eine IR-reflektierende Funktionalität bereitgestellt. Durch den verringerten Eintrag von Wärmestrahlung in den Fahrzeuginnenraum wird der thermische Komfort verbessert.

Die Erfindung umfasst weiter ein Verfahren zur Herstellung einer erfindungsgemäßen beheizbaren laminierten Seitenscheibe, mindestens umfassend
(a) Bereitstellen der Außenscheibe, der Innenscheibe und der Zwischenschicht,
(b) Bereitstellen der beheizbaren Beschichtung auf einer Oberfläche der Außenscheibe oder der Innenscheibe oder auf einer Trägerfolie,
(c) Einbringen der Isolierungslinien in die beheizbare Beschichtung,
(d) Kontaktierung der beheizbaren Beschichtung mittels der Stromsammelschienen,
(e) Anordnen der Zwischenschicht zwischen einer Außenscheibe und einer Innenscheibe,
(f) Verbinden der Außenscheibe mit der Innenscheibe über die Zwischenschicht durch Lamination.

Wird die Beschichtung auf eine Oberfläche einer der Scheiben aufgebracht, so wird der Stapel in Schritt (e) so angeordnet, dass die Beschichtung der Zwischenschicht zugewandt ist. Wird die Beschichtung auf einer Trägerfolie bereitgestellt, so wird in Schritt (e) diese Trägerfolie bevorzugt zwischen einer ersten thermoplastischen Folie und einer zweiten thermoplastischen Folie angeordnet. Die thermoplastischen Folien bilden zusammen mit der Trägerfolie die Zwischenschicht.

Die beheizbare Beschichtung wird mittels an sich bekannter Verfahren aufgebracht. Bevorzugt erfolgt das Beschichten durch magnetfeldunterstützte Kathodenzerstäubung (Sputtern). Das ist besonders vorteilhaft im Hinblick auf eine einfache, schnelle, kostengünstige und gleichmäßige Beschichtung des Substrats. Trägerfolien mit beheizbaren Beschichtungen sind auch kommerziell erhältlich, so dass die beschichtete Trägerfolie nicht eigens hergestellt werden muss.

Das Einbringen der Isolierungslinien erfolgt bevorzugt durch Laserbearbeitung, kann aber prinzipiell auch mit anderen Methoden erfolgen, beispielsweise mechanische Abrasion. Die Strukturierung von leitfähigen Schichten ist dem Fachmann an sich hinlänglich bekannt.

Das Anbringen der Stromsammelschienen kann insbesondere durch Auflegen, Aufdrucken, Löten oder Kleben erfolgen. Die Zwischenschicht wird in Form zumindest einer Folie bereitgestellt.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon.

Die Verbindung von Außenscheibe und Innenscheibe dabei erfolgt üblicherweise unter Einwirkung von Hitze, Vakuum und / oder Druck.

Die erfindungsgemäße Seitenscheibe wird bevorzugt in Fortbewegungsmitteln für den Verkehr auf dem Lande, in der Luft oder zu Wasser verwendet, insbesondere in Kraftfahrzeugen.

Im Folgenden wird die Erfindung anhand von Figuren und Ausführungsbeispielen näher erläutert. Die Figuren sind rein schematische Darstellungen und nicht maßstabsgetreu. Die Figuren schränken die Erfindung in keiner Weise ein.

Es zeigen:
- Fig. 1: eine Draufsicht auf eine Ausgestaltung der erfindungsgemäßen Seitenscheibe,
- Fig. 2: einen Schnitt entlang A-A' durch die Seitenscheibe aus Figur 1,
- Fig. 3: einen Schnitt entlang B-B' durch die Seitenscheibe aus Figur 1,
- Fig. 4: ein Flussdiagramm einer Ausführungsform des erfindungsgemäßen Verfahrens.

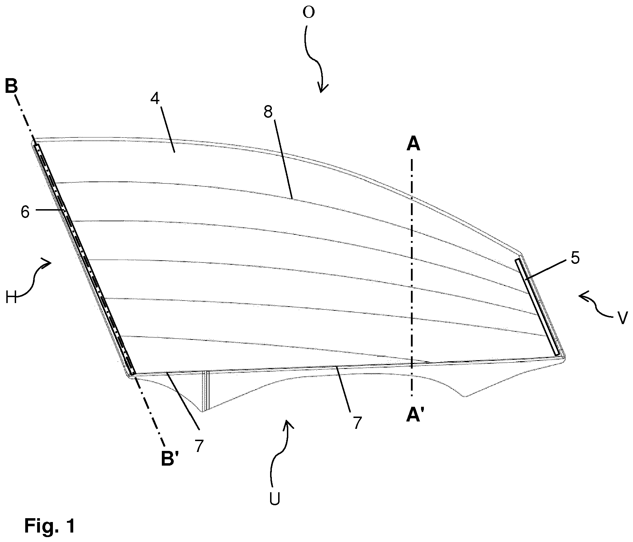

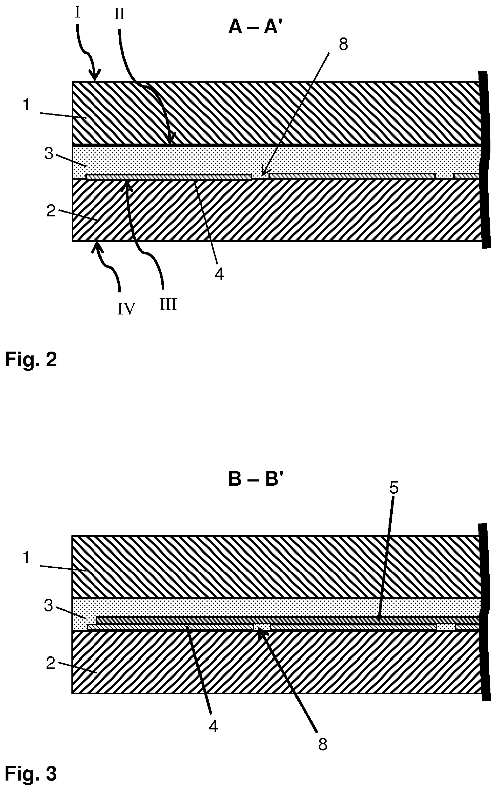

Fig. 1, Fig. 2 und Fig. 3 zeigen je ein Detail einer Ausgestaltung der erfindungsgemäßen beheizbaren laminierten Seitenscheibe. Die Seitenscheibe ist für das vordere Seitenfenster eines Personenkraftwagens vorgesehen, welches sich durch Herunterfahren der Seitenscheibe öffnen lässt. Die Seitenscheibe weist eine Vorderkante V, eine Hinterkante H, eine Oberkante O und eine Unterkante U auf. Die Kanten sind entsprechend der Einbaulage in Fahrtrichtung bezeichnet.

Die Seitenscheibe ist ein Verbundglas aus einer Außenscheibe 1, einer Innenscheibe 2 und einer Zwischenschicht 3, welche die beiden Scheiben miteinander verbindet. Die Außenscheibe 1 und die Innenscheibe 2 bestehen aus Kalk-Natron-Glas und weisen beispielsweise eine Dicke von jeweils 2,1 mm auf. Die Zwischenschicht 3 ist durch eine Folie aus PVB gebildet mit einer Dicke von 0,76 mm.

Die Außenscheibe 1 weist eine Außenfläche I und eine Innenfläche II auf. Die Innenscheibe 2 weist ebenfalls eine Außenfläche III und eine Innenfläche IV auf. Mit Außenfläche wird dabei diejenige Oberfläche bezeichnet, welche dafür vorgesehen ist, in Einbaulage der äußeren Umgebung zugewandt zu sein. Mit Innenfläche wird diejenige Oberfläche bezeichnet, welche dafür vorgesehen ist, in Einbaulage dem Fahrzeuginnenraum zugewandt zu sein. Die Innenfläche II der Außenscheibe 1 und die Außenfläche III der Innenscheibe 2 sind einander und der Zwischenschicht 3 zugewandt.

Auf der Außenfläche III der Innenscheibe 2 ist eine transparente, beheizbare Beschichtung 4 aufgebracht. Die beheizbare Beschichtung weist beispielsweise zwei Silberschichten auf und weitere dielektrische Schichten über, unter und zwischen den Silberschichten zur Erhöhung von Transparenz und Verringerung des Flächenwiderstands. Zur Erzeugung der Heizwirkung ist die Beschichtung 4 mittels einer ersten Stromsammelschiene 5 und einer zweiten Stromsammelschiene 6 elektrisch kontaktiert. Die Stromsammelschienen 5, 6 sind beispielsweise durch eine aufgedruckte und eingebrannte Siebdruckpaste enthaltend Silberpartikel und Glasfritten ausgebildet und weisen eine Breite von 8 mm und eine Dicke von 100 µm auf. Wird an die Stromsammelschienen 5, 6 eine Spannung angelegt, so fließt ein Strom durch die Beschichtung 4, wodurch die Heizwirkung entsteht. Die Spannung kann die übliche KFZ-Bordspannung von 14 V sein, oder auch eine Spannung von beispielsweise 42 V oder 48 V.

Die beheizbare Beschichtung 4 ist durch Isolierungslinien 8 in verschiedene Segmente (Heizstreifen) unterteilt. Dies dient der Lenkung des Heizstroms, wodurch eine möglichst homogene Beheizung der Scheibe ermöglicht wird. Aufgrund der komplexen Form typischer Seitenscheiben blieben sonst wesentliche Teile der Scheibe unbeheizt, weil der Strom dem kürzesten Weg zwischen den Stromsammelschienen 5, 6 nehmen würde.

Die erste Stromsammelschiene 5 verläuft entlang der Vorderkante V der Seitenscheibe, die zweite Stromsammelschiene 6 verläuft entlang der Hinterkante H. Der maximale Abstand der Stromsammelschienen zu der Kante, entlang derer sie verlaufen, beträgt beispielsweise 2 cm. Entgegen der bislang vorherrschenden Auffassung zum Design gattungsgemäßer Seitenscheiben sind die Stromsammelschienen 5, 6 auch im geöffneten Zustand des Seitenfensters für einen Betrachter nicht sichtbar. Stattdessen sind die Stromsammelschienen 5, 6 von Karosserieteilen und Dichtlippen typischer Seitenfenster abgedeckt. Der minimale Abstand beträgt beispielsweise 6 mm. Dieser Abstand ist ausreichend, um eine Störung der Stabilität des Laminats und ein Eindringen von Luft zu verhindern.

Die Isolierungslinien 8 verlaufen ohne starke Krümmungen von der ersten Stromsammelschiene 5 zur zweiten Stromsammelschiene 6. Dadurch können lokale Überhitzungen vermieden werden. Zudem ist die Gestaltung optisch ansprechend. Die Isolierungslinien 8 weisen lediglich eine geringe, mit kleiner werdendem Abstand zur Oberkante O zunehmende Krümmung auf. Dadurch wird trotz der komplexen Scheibenform mit der gekrümmten Oberkante O eine gleichmäßige Verteilung der Heizleistung erreicht.

Der Abstand benachbarter Isolierungslinien 8 (das heißt die Breite der Heizstreifen) nimmt im Verlauf von Hinterkante H zu Vorderkante V ab. Dadurch wird im Bereich der Vorderkante V eine höhere Heizleistung erreicht. Dieser Bereich wird daher im Betrieb zuerst enteist oder von Feuchtigkeit befreit, wodurch der Fahrzeugfahrer zügig eine freie Sicht auf den Seitenspiegel erhält. Die Breite der Heizstreifen an der ersten Stromsammelschiene 5 (Vorderkante) beträgt beispielsweise 45 mm, an der zweiten Stromsammelschiene 6 (Hinterkante) beispielsweise 75 mm.

Die Seitenscheibe verfügt weiter über zwei Zuleitungen 7. Jede Zuleitung 7 ist mit einer Stromsammelschiene 5, 6 elektrisch kontaktiert und verläuft zur Unterkante U, wo sie mit einem Verbindungskabel zur externen Spannungsversorgung kontaktiert werden kann. Die Zuleitungen können ebenfalls als silberhaltiger Siebdruck oder auch als leitfähige Folie ausgebildet sein. Die Zuleitungen 7 weisen jeweils einen Abschnitt auf, der entlang der Unterkante U verläuft. Die Enden der Zuleitungen 7, die mit den externen Verbindungskabeln zur Spannungsversorgung vorgesehen sind, sind so zueinander geführt und weisen einen Abstand von beispielsweise 12 mm auf. Ihr geringer gegenseitiger Abstand kann anschlusstechnische Vorteile aufweisen.

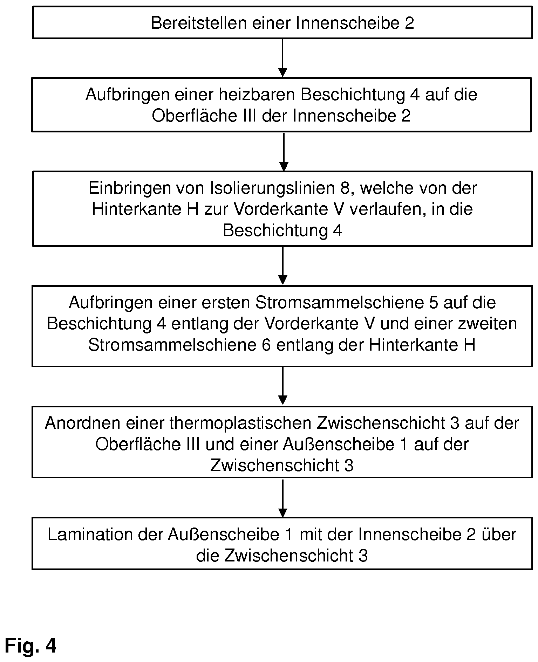

Fig. 4 zeigt ein Flussdiagramm eines Ausführungsbeispiels des erfindungsgemäßen Verfahrens zur Herstellung einer erfindungsgemäßen laminierten beheizbaren Seitenscheibe.

### Bezugszeichenliste:

- (1): Außenscheibe
- (2): Innenscheibe
- (3): thermoplastische Zwischenschicht
- (4): beheizbare Beschichtung
- (5): erste Stromsammelschiene
- (6): zweite Stromsammelschiene
- (7): Zuleitung
- (8): Isolierungslinie

- H: Hinterkante der Seitenscheibe
- O: Oberkante der Seitenscheibe
- V: Vorderkante der Seitenscheibe
- U: Unterkante der Seitenscheibe

- I: Außenfläche der Außenscheibe 1
- II: Innenfläche der Außenscheibe 1
- III: Außenfläche der Innenscheibe 2
- IV: Innenfläche der Innenscheibe 2

- A-A': Schnittlinie
- B-B': Schnittlinie

## Patentansprüche

1. Beheizbare laminierte Seitenscheibe für ein öffenbares Seitenfenster eines Fahrzeugs, mit einer Oberkante (O), einer Unterkante (U), einer Vorderkante (V) und einer Hinterkante (H), mindestens umfassend
- eine Außenscheibe (1) und eine Innenscheibe (2), welche über eine thermoplastische Zwischenschicht (3) miteinander verbunden sind,
- eine zwischen der Außenscheibe (1) und der Innenscheibe (2) angeordnete transparente, beheizbare Beschichtung (4), welche mittels einer ersten Stromsammelschiene (5) und einer zweiten Stromsammelschiene (6) elektrisch kontaktiert ist und welche zur Lenkung eines zwischen den Stromsammelschienen (5, 6) fließenden Heizstroms zumindest eine entschichtete Isolierungslinie (8) aufweist, die zwischen den Stromsammelschienen (5, 6) verläuft,
wobei die erste Stromsammelschiene (5) und die zweite Stromsammelschiene (6) entlang der Vorderkante (V) oder der Hinterkante (H) angeordnet sind.
wobei die Heizleistung von der Hinterkante H zur Vorderkante V zumindest abschnittsweise zunimmt, und
wobei der Abstand benachbarter Isolierungslinien (8) von der Hinterkante H zur Vorderkante V zumindest abschnittsweise abnimmt von einem maximalen Abstand von 55 mm bis 110 mm auf einen minimalen Abstand von 10 mm bis 55 mm.

2. Seitenscheibe nach Anspruch 1, wobei die erste Stromsammelschiene (5) entlang der Vorderkante (V) und die zweite Stromsammelschiene (6) entlang der Hinterkante (H) angeordnet ist.

3. Seitenscheibe nach Anspruch 1, wobei die erste Stromsammelschiene (5) und die zweite Stromsammelschiene (6) entlang derselben Kante (V, H) angeordnet sind.

4. Seitenscheibe nach einem der Ansprüche 1 bis 3, wobei der maximale Abstand der Stromsammelschienen (5, 6) von derjenigen Kante, entlang derer sie angeordnet sind, kleiner 3 cm, bevorzugt kleiner 2,5 cm, besonders bevorzugt kleiner 2 cm beträgt.

5. Seitenscheibe nach einem der Ansprüche 1 bis 4, wobei der minimale Abstand der Stromsammelschienen (5, 6) von derjenigen Kante, entlang derer sie angeordnet sind, größer 3 mm, bevorzugt größer 5 mm beträgt.

6. Seitenscheibe nach einem der Ansprüche 1 bis 5, wobei die beheizbare Beschichtung (4) auf der der Zwischenschicht (3) zugewandten Oberfläche (II, III) der Außenscheibe (1) oder der Innenscheibe (2) oder auf einer polymeren Trägerfolie innerhalb der Zwischenschicht (3) aufgebracht ist.

7. Seitenscheibe nach einem der Ansprüche 1 bis 6, wobei die beheizbare Beschichtung (4) mindestens eine elektrisch leitfähige Schicht umfasst, welche zumindest Silber enthält und eine Dicke von 10 nm bis 50 nm aufweist, bevorzugt zwei oder drei elektrisch leifähige Schichten.

8. Seitenscheibe nach einem der Ansprüche 1 bis 7, wobei die beheizbare Beschichtung (4) eine Mehrzahl von Isolierungslinien (8) aufweist mit einer Linienbreite von kleiner oder gleich 500 µm bevorzugt von 10 µm bis 250 µm besonders bevorzugt von 20 µm bis 150 µm und wobei der Abstand von benachbarten Isolierungslinien (8) von 1 cm bis 10 cm beträgt, bevorzugt von 2 cm bis 6 cm.

9. Seitenscheibe nach einem der Ansprüche 1 bis 8, wobei die Stromsammelschienen (5, 6) als Streifen einer elektrisch leitfähigen Folie ausgebildet sind, die bevorzugt Kupfer enthält, oder als eingebrannte Siebdruckpaste, die bevorzugt Silberpartikel enthält.

10. Seitenscheibe nach einem der Ansprüche 1 bis 9, wobei die Breite der Stromsammelschienen (5, 6) von 1 mm bis 20 mm, bevorzugt von 2 mm bis 10 mm beträgt.

11. Seitenscheibe nach einem der Ansprüche 1 bis 10, wobei beide Stromsammelschienen (5, 6) mit jeweils einer Zuleitung (7) elektrisch verbunden sind, wobei die Zuleitungen (7) zur Unterkante (U) verlaufen, und wobei die den Stromsammelschienen (5, 6) entgegengesetzten Enden der Zuleitungen (7) einen Abstand voneinander von kleiner oder gleich 30 mm, bevorzugt kleiner oder gleich 20 mm, besonders bevorzugt kleiner oder gleich 20 mm aufweisen.

12. Verfahren zur Herstellung einer beheizbaren laminierten Seitenscheibe nach einem der Ansprüche 1 bis 11, mindestens umfassend:
(a) Bereitstellen der Außenscheibe (1), der Innenscheibe (2) und der Zwischenschicht (3),
(b) Bereitstellen der beheizbaren Beschichtung (4) auf einer Oberfläche (II,III) der Außenscheibe (1) oder der Innenscheibe (2) oder auf einer Trägerfolie,
(c) Einbringen der Isolierungslinien (8) in die beheizbare Beschichtung (4),
(d) Kontaktierung der beheizbaren Beschichtung (4) mittels der Stromsammelschienen (5,6),
(e) Anordnen der Zwischenschicht (3) zwischen der Außenscheibe (1) und der Innenscheibe (2) und
(f) Verbinden der Außenscheibe (1) mit der Innenscheibe (2) über die Zwischenschicht (3) durch Lamination.

13. Verwendung einer Seitenscheibe nach einem der Ansprüche 1 bis 11 in Fortbewegungsmitteln für den Verkehr auf dem Lande, in der Luft oder zu Wasser, insbesondere in Kraftfahrzeugen.

## Claims

1. Heatable laminated side pane for an openable side window of a vehicle, with an upper edge (O), a lower edge (U), a front edge (V), and a rear edge (H),
at least comprising
- an outer pane (1) and an inner pane (2), which are bonded to one another via a thermoplastic intermediate layer (3),
- a transparent, heatable coating (4), which is arranged between the outer pane (1) and the inner pane (2) and which is electrically contacted by means of a first collecting rail (5) and a second collecting rail (6) and which has, for guiding a heating current flowing between the collecting rails (5,6), at least one de-coated isolating line (8) that runs between the collecting rails (5, 6),
wherein the first collecting rail (5) and the second collecting rail (6) are arranged along the front edge (V) or the rear edge (H),
wherein the heating power increases, at least in sections, from the rear edge H to the front edge V, and
wherein the distance between adjacent isolating lines (8) decreases, at least in sections, from the rear edge H to the front edge V from a maximum distance of 55 mm to 110 mm to a minimum distance of 10 mm to 55 mm.

2. Side pane according to claim 1, wherein the first collecting rail (5) is arranged along the front edge (V) and the second collecting rail (6) is arranged along the rear edge (H).

3. Side pane according to claim 1, wherein the first collecting rail (5) and the second collecting rail (6) are arranged along the same edge (V, H).

4. Side pane according to one of claims 1 through 3, wherein the maximum distance of the collecting rails (5, 6) from the edge along which they are arranged is less than 3 cm, preferably less than 2.5 cm, particularly preferably less than 2 cm.

5. Side pane according to one of claims 1 through 4, wherein the minimum distance of the collecting rails (5, 6) from the edge along which they are arranged is greater than 3 mm, preferably greater than 5 mm.

6. Side pane according to one of claims 1 through 5, wherein the heatable coating (4) is applied on the surface (II, III) of the outer pane (1) or of the inner pane (2) facing the intermediate layer (3) or on a polymeric carrier film within the intermediate layer (3).

7. Side pane according to one of claims 1 through 6, wherein the heatable coating (4) comprises at least one electrically conductive layer, which contains at least silver and has a thickness of 10 nm to 50 nm, preferably two or three electrically conductive layers.

8. Side pane according to one of claims 1 through 7, wherein the heatable coating (4) has a plurality of isolating lines (8) with a line width less than or equal to 500 µm, preferably of 10 µm to 250 µm, particularly preferably of 20 µm to 150 µm, and wherein the distance between adjacent isolating lines (8) is from 1 cm to 10 cm, preferably from 2 cm to 6 cm.

9. Side pane according to one of claims 1 through 8, wherein the collecting rails (5, 6) are implemented as strips of an electrically conductive film, which preferably contains copper, or as fired screen-printing paste, which preferably contains silver particles.

10. Side pane according to one of claims 1 through 9, wherein the width of the collecting rails (5, 6) is from 1 mm to 20 mm, preferably from 2 mm to 10 mm.

11. Side pane according to one of claims 1 through 10, wherein the two collecting rails (5, 6) are electrically connected to one supply line (7) in each case, wherein the supply lines (7) run to the lower edge (U), and wherein the ends of the supply lines (7) opposite the collecting rails (5, 6) have a distance from one another less than or equal to 30 mm, preferably less than or equal to 20 mm, particularly preferably less than or equal to 20 mm.

12. Method for producing a heatable laminated side pane according to one of claims 1 through 11, at least comprising:
(a) Providing the outer pane (1), the inner pane (2), and the intermediate layer (3),
(b) Providing the heatable coating (4) on a surface (II, III) of the outer pane (1) or of the inner pane (2) or on a carrier film,
(c) Introducing the isolating lines (8) into the heatable coating (4),
(d) Contacting the heatable coating (4) by means of the collecting rails (5,6),
(e) Arranging the intermediate layer (3) between the outer pane (1) and the inner pane (2) and
(f) Bonding the outer pane (1) to the inner pane (2) via the intermediate layer (3) by lamination.

13. Use of a side pane according to one of claims 1 through 11 in means of transportation for travel on land, in the air, or on water, in particular in motor vehicles

## Revendications

1. Vitre latérale stratifiée chauffante pour une fenêtre latérale ouvrable d'un véhicule, avec un bord supérieur (O), un bord inférieur (U), un bord avant (V) et un bord arrière (H), comprenant au moins
- une vitre extérieure (1) et une vitre intérieure (2), qui sont liées l'une à l'autre par une couche intermédiaire thermoplastique (3),
- un revêtement (4) transparent, pouvant être chauffé, qui est disposé entre la vitre extérieure (1) et la vitre intérieure (2) et qui est mis en contact électrique au moyen d'un premier rail collecteur (5) et d'un deuxième rail collecteur (6) et qui présente, pour le guidage d'un courant de chauffage circulant entre les rails collecteurs (5, 6), au moins une ligne d'isolation (8) sans revêtement qui s'étend entre les rails collecteurs (5, 6),
dans lequel le premier rail collecteur (5) et le deuxième rail collecteur (6) sont disposés le long du bord avant (V) ou du bord arrière (H),
la puissance de chauffage augmente, au moins par sections, du bord arrière H au bord avant V, et
dans lequel la distance entre les lignes d'isolation adjacentes (8) diminue, au moins par sections, du bord arrière H au bord avant V, d'une distance maximale de 55 mm à 110 mm à une distance minimale de 10 mm à 55 mm.

2. Vitre latérale selon la revendication 1, dans laquelle le premier rail collecteur (5) est disposé le long du bord avant (V) et le second rail collecteur (6) est disposé le long du bord arrière (H).

3. Vitre latérale selon la revendication 1, dans laquelle le premier rail collecteur (5) et le deuxième rail collecteur (6) sont disposés le long du même bord (V, H).

4. Vitre latérale selon l'une des revendications 1 à 3, dans laquelle la distance maximale des rails collecteurs (5, 6) par rapport au bord le long duquel ils sont disposés est inférieure à 3 cm, de préférence inférieure à 2,5 cm, de manière particulièrement préférée inférieure à 2 cm.

5. Vitre latérale selon l'une des revendications 1 à 4, dans laquelle la distance minimale des rails collecteurs (5, 6) par rapport au bord le long duquel ils sont disposés est supérieure à 3 mm, de préférence supérieure à 5 mm.

6. Vitre latérale selon l'une des revendications 1 à 5, dans laquelle le revêtement chauffant (4) est appliqué sur la surface (II, III) de la vitre extérieure (1) ou de la vitre intérieure (2) tournée vers la couche intermédiaire (3) ou sur un film support polymère à l'intérieur de la couche intermédiaire (3).

7. Vitre latérale selon l'une des revendications 1 à 6, dans laquelle le revêtement chauffant (4) comprend au moins une couche électriquement conductrice, qui contient au moins de l'argent et présente une épaisseur de 10 nm à 50 nm, de préférence deux ou trois couches électriquement conductrices.

8. Vitre latérale selon l'une des revendications 1 à 7, dans laquelle le revêtement chauffable (4) présente une pluralité de lignes d'isolation (8) avec une largeur de ligne inférieure ou égale à 500 µm, de préférence de 10 µm à 250 µm, de manière particulièrement préférée de 20 µm à 150 µm, et dans laquelle la distance entre des lignes d'isolation (8) adjacentes est de 1 cm à 10 cm, de préférence de 2 cm à 6 cm.

9. Vitre latérale selon l'une des revendications 1 à 8, dans laquelle les rails collecteurs (5, 6) sont réalisés sous forme de bandes d'un film électriquement conducteur, qui contient de préférence du cuivre, ou sous forme de pâte sérigraphique cuite, qui contient de préférence des particules d'argent.

10. Vitre latérale selon l'une des revendications 1 à 9, dans laquelle la largeur des rails collecteurs (5, 6) est comprise entre 1 mm et 20 mm, de préférence entre 2 mm et 10 mm.

11. Vitre latérale selon l'une des revendications 1 à 10, dans laquelle les deux rails collecteurs (5, 6) sont reliés électriquement chacun à une ligne d'alimentation (7), dans laquelle les lignes d'alimentation (7) s'étendent jusqu'au bord inférieur (U), et dans laquelle les extrémités des lignes d'alimentation (7) opposées aux rails collecteurs (5, 6) présentent une distance entre elles inférieure ou égale à 30 mm, de préférence inférieure ou égale à 20 mm, de manière particulièrement préférée inférieure ou égale à 20 mm.

12. Procédé de fabrication d'une vitre latérale stratifiée chauffante selon l'une des revendications 1 à 11, comprenant au moins :
(a) la fourniture de la vitre extérieure (1), de la vitre intérieure (2) et de la couche intermédiaire (3),
(b) la fourniture du revêtement chauffant (4) sur une surface (II, III) de la vitre extérieure (1) ou de la vitre intérieure (2) ou sur un film support,
(c) introduire les lignes d'isolation (8) dans le revêtement chauffable (4),
(d) mise en contact du revêtement chauffable (4) au moyen des rails collecteurs (5, 6),
(e) disposer la couche intermédiaire (3) entre la vitre extérieure (1) et la vitre intérieure (2) et
(f) coller la vitre extérieure (1) à la vitre intérieure (2) par l'intermédiaire de la couche intermédiaire (3) par laminage.

13. Utilisation d'une vitre latérale selon l'une des revendications 1 à 11 dans des moyens de transport destinés à se déplacer sur terre, dans les airs ou sur l'eau, notamment dans des véhicules automobiles.
